# EUROPEAN PATENT SPECIFICATION

(11) **EP 3 970 954 B1**
(45) Date of publication and mention of the grant of the patent: **15.11.2023**
(21) Application number: 20382583.1
(22) Date of filing: 17.09.2020
(51) Int. Cl.: B29C 70/30

(54) **COMPOSITE LAMINATE FOR AN AIRFRAME LIFTING SURFACE AND METHOD FOR MANUFACTURING THEREOF**
VERBUNDLAMINAT FÜR EINE FLUGWERKHUBFLÄCHE UND VERFAHREN ZUR HERSTELLUNG DAVON
STRATIFIÉ COMPOSITE POUR SURFACE DE LEVAGE DE FUSELAGE ET SON PROCÉDÉ DE FABRICATION

(43) Date of publication of application: 23.03.2022
(73) Proprietor: Airbus Operations, S.L.U., 28906 Getafe (ES)
(72) Inventor: TORRES ESTEBAN, Antonio, 28906 Getafe (ES); RECIO MELERO, Manuel, 28906 Getafe (ES); BLANCO SAINZ, Jose Maria, 28906 GETAFE (ES); NOGUEROLES VIÑES, Pedro, 28906 Getafe (ES)

(56) References cited:
- US-A1- 2009 148 647
- Zhang et al.: "Effect of ply-drops with gaps in tapered laminate", Elsevier Composites Communications, vol. 18 1 April 2020 (2020-04-01), pages 26-31, XP002802191, ISSN: 2452-2139, DOI: 10.1016/j.coco.2020.01.003 Retrieved from the Internet: URL:http://dx.doi.org/10.1016/j.coco.2020. 01.003

## Description

### TECHNICAL FIELD OF THE INVENTION

The present invention belongs to the field of composite laminates used in aeronautical structures, and particularly, of those composite laminates that include a ramp. In particular, the invention provides a composite laminate with a ramp for an airframe lifting surface, and a method for manufacturing thereof.

Accordingly, an object of the present invention is to provide an improved laminate for an airframe lifting surface, which is also suitable to be made by high deposition pre-impregnated (HD preg) material formats with better results than the state of the art laminates when used as interface with other aircraft parts or components.

### BACKGROUND OF THE INVENTION

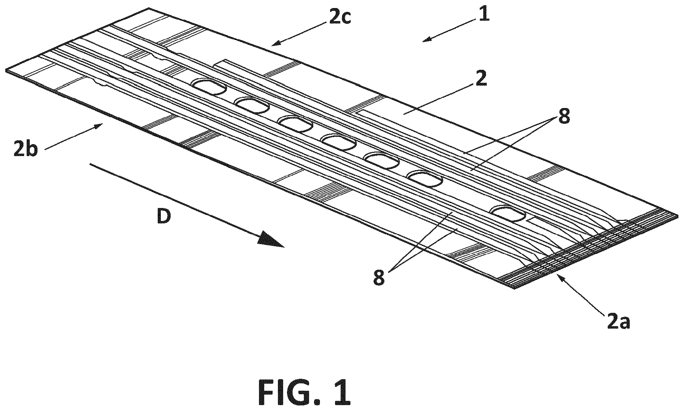

As shown in Figure 1, a composite airframe lifting surface (1) is typically composed by a skin in the form of a composite laminate (2) stiffened by stringers (8). This composite airframe lifting surface (1) may consist of a torsion box, a horizontal tail plane, a vertical tail plane, a rudder, an elevator, an aileron, a spoiler, or a flap.

Typically, these composite airframe lifting surfaces are manufactured with standard pre-preg materials by means of 'Automated Fibre Placement', AFP, or 'Automated Tape Laying', ATL, technologies. Both ATL and AFP processes are functionally similar, applying resin-impregnated fibre material (so called 'prepreg'), although each one of them is used differently to achieve specific structure construction goals to provide strength or stiffness where needed. The use of one or the other mainly depends on the geometry complexity of the part to manufacture, in which AFP allows higher curvatures. However, in both methods, the lay-up processes need a high volume of labour hours in despite of the automation of the process. Thus, according to a high production rate scenario, a big investment is requested in terms of machines and shop floor to compensate the large lead time involved in said lay-up processes.

High deposition pre-preg material formats are known in the aeronautical field to those formats and technology able to substantially reduce the lay-up time needed to obtain these composite structures. These high deposition pre-preg materials are pre-impregnated composite fibres materials where a thermoset polymer matrix material or a thermoplastic resin is already present. The technology design of these material formats allow a quick lay up of tapes (tows) of pre-preg material since they are provided in a wider format (>1.5 inch wide - 3.81 cm -) than the conventional standard pre-preg material formats; and in some cases, also thicker than the conventional standard pre-preg material formats. However, nowadays the high deposition pre-preg technology are not considered for the manufacture of the current composite airframe lifting surfaces due to the irregularities and loss of quality that appear in the composite laminate of the lifting surfaces once they are cured.

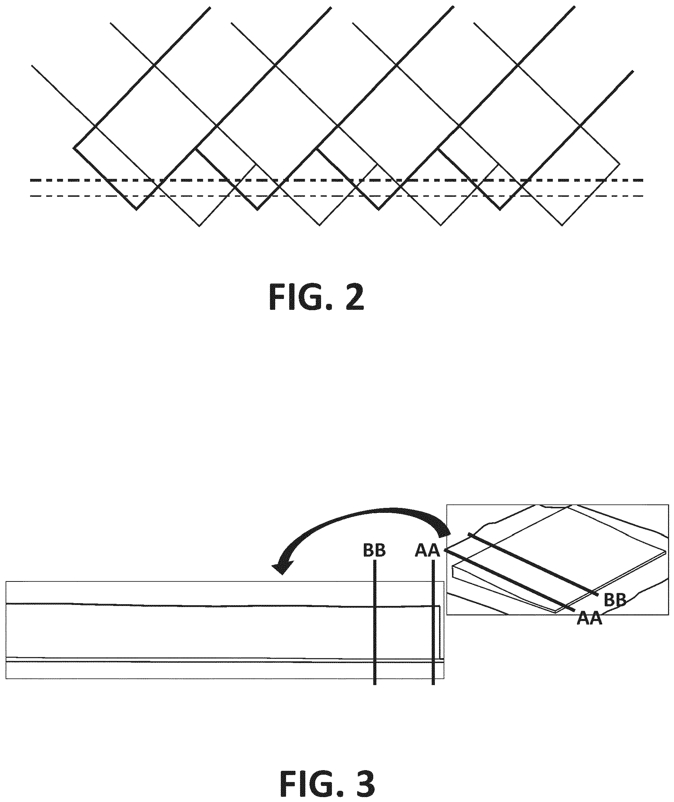

In addition, most of the current designs of composite airframe lifting surfaces that comprise a ramp portion used to contain some irregularities in the ramp due to the so-called saw teeth effect. The saw teeth effect in the ramp area is generated when the ends of the tapes that conform each ply of the laminated ramp are not aligned or perpendicular to the ramp direction, leaving triangles forming a "saw teeth". See Figure 2. The direction of the ramp is understood as the direction of decrease of the lifting surface thickness along the ramp portion laminate.

This saw teeth effect in the ramp produces deviations on the obtained composite airframe lifting surfaces compared with the theoretical lifting surfaces. When the airframe lifting surfaces are manufactured with current material formats, the saw teeth effect is minimal. However, the teeth effect worsens (in depth and size of the teeth) when the composite airframe lifting surface manufactured with high deposition pre-preg formats by the increase in width (and sometimes thickness) of the tapes that conform it.

Therefore, the low quality surface usually obtained may affect to the component design, avoiding having a controlled surface for other parts or components interfaces. Figure 3 shows an example of these irregular surfaces, where section AA creates a peak, and section BB creates a valley.

These interfaces between components or parts may be co-cured, co-bonded or fastened. The irregular surface at the interface may derive in compactation issues (porosity and wrinkles) in a co-cured process; irregular adhesive thickness distribution in a co-bonded process (bonding issues); and irregular gaps to be shimmed in a fastened interface with huge lead time and labour increase.

US 2009/148647 A1 discloses a composite laminate for an airframe lifting surface, the composite laminate being made of a pre-preg material and comprising at least two sides and one ramp area defined by a decreasing staggered laminate extended along a ramp direction, wherein the composite laminate comprises a combination of plies formed by tapes arranged in different directions.

### SUMMARY OF THE INVENTION

The present invention provides a solution for the aforementioned problems by a composite laminate for an airframe lifting surface, and a method for manufacturing a composite laminate for an airframe lifting surface that produces a composite with a ramp unaffected by the saw teeth effect. Thus, the laminate of the invention can be made of HD-preg material formats without affecting the quality of the ramp surface.

In a first inventive aspect, the present invention provides a composite laminate for an airframe lifting surface, the composite laminate being made of a pre-preg material, and comprising at least two sides and one ramp area defined by a decreasing staggered laminate extended along a ramp direction. The composite laminate comprises a combination of:
- first plies formed by tapes arranged parallel to the ramp direction,
- second plies formed by tapes arranged orthogonal to the ramp direction,
- third plies formed by tapes arranged in a first laying up direction, being the first laying up direction different from the ramp direction and the direction orthogonal to the ramp direction, and
- fourth plies formed by tapes arranged in a second laying up direction, being the second laying up direction different from the ramp direction, the direction orthogonal to the ramp direction and the first laying up direction;
and wherein in the ramp area, the tapes forming the third and/or fourth plies are extended from one laminate side to another laminate side.

The composite laminate should be understood as a set of stacked plies manufactured with composite materials, wherein each py is formed by tapes laid-up following one and the same laying up direction. In the invention, these tapes forming the plies are preferably high deposition pre-preg materials. Preferably, the lay-up of these materials is performed by AFP.

Throughout this document, a ply (layer) should be understood as a single continuous area of composite material formed by a plurality of tapes laid up (arranged) following the same direction. The successive lay-up of the plies forms a stack or a set of stacked plies, which will finally conform a laminate.

The composite laminate of the invention comprises at least one ramp area on one of its ends, which corresponds to a decreasing staggered laminate along a ramp direction. The ramp direction D will be understood as a direction extended along to the decreasing staggered laminate, that is, a direction defined from a free ramp laminate portion of the laminate to the end of the ramp area of said laminate.

According to the invention, the composite laminate has a different lay out configuration in the ramp area with respect to the rest of the laminate (no-ramp area or free-ramp area).

The specific lay out configuration in the ramp area is determined by the tapes of the third and/or the fourth plies: Particularly, the tapes forming the third and/or the fourth plies are extended from one laminate side to another laminate side. Preferably, this another laminate side is an opposite laminate side.

Unlike the conventional designs of composite airframe lifting surface laminates, the present invention provides a new laminate design free from the saw teeth effect in the ramp area. Thus, the laminate of the invention is compatible with high deposition pre-preg material formats, providing an increase of quality in the skin ramps. So that, the invention provides a quality surface that facilitates the joint between such composite laminate and other components by means of the co-cured, co-bonded or fastening joint. In addition, the laminate design ensures the required tolerances at the bolted interface areas with other components.

In addition, the composite laminate manufactured with high deposition pre-preg materials provides cost and lead time reduction, since a high production rate may be used.

In a particular embodiment, the tapes of each ply have a width greater than 3,81 cm thus conforming a laminate with high deposition pre-preg materials.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a perspective view of an airframe lifting surface.
- Figure 2: This figure shows the saw teeth effect on a state of the art laminate.
- Figure 3: This figure shows an irregular surface of a state of the art laminate.
- Figure 4: This figure shows a schematic representation of a first embodiment of a composite laminate according to the present invention.
- Figure 4A: This figure shows a detailed view of Figure 4.
- Figure 5: This figure shows a schematic representation of a second embodiment of a composite laminate according to the present invention.
- Figure 5A: This figure shows a detailed view of Figure 5.
- Figure 6: This figure shows an aircraft including a composite laminate according to an embodiment of the present invention.

### DETAILED DESCRIPTION OF THE INVENTION

The present invention provides an improved design for a composite laminate having a ramp and intended to be used as an aircraft airframe lifting surface. This improvement in such that the laminate can be manufactured with pre-preg material formats without compromising the ramp surface quality.

Figure 1 shows a perspective view of an airframe lifting surface (1) that comprises a composite laminate (2) composed by a set of stacked plies of pre-preg material. The composite laminate (2) comprises a ramp area (2a) with a decreasing staggered laminate. This ramp area (2a) is extended parallel to a ramp direction D corresponding with the direction of the decreasing staggered laminate.

This composite laminate (2) has an elongate configuration, comprising the ramp area (2a) between its two longest opposite sides (2b, 2c).

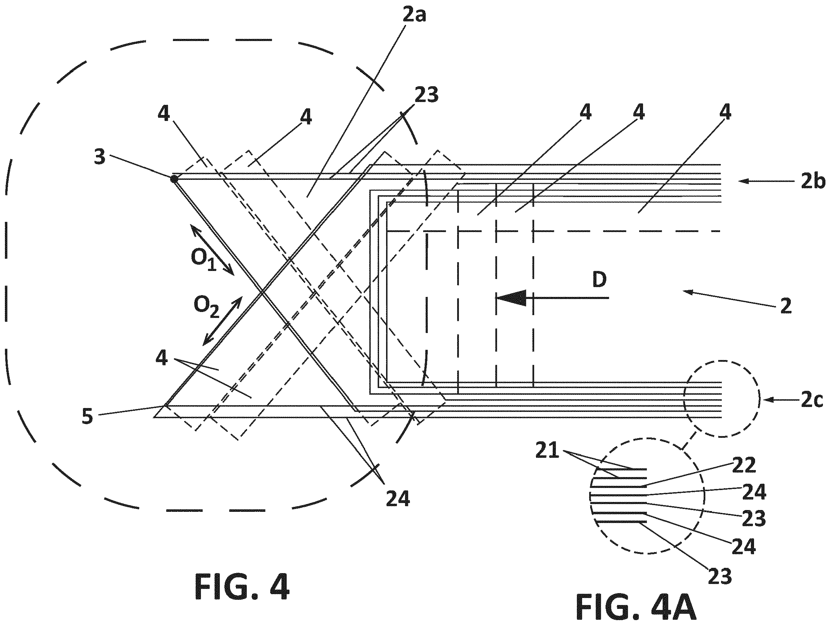

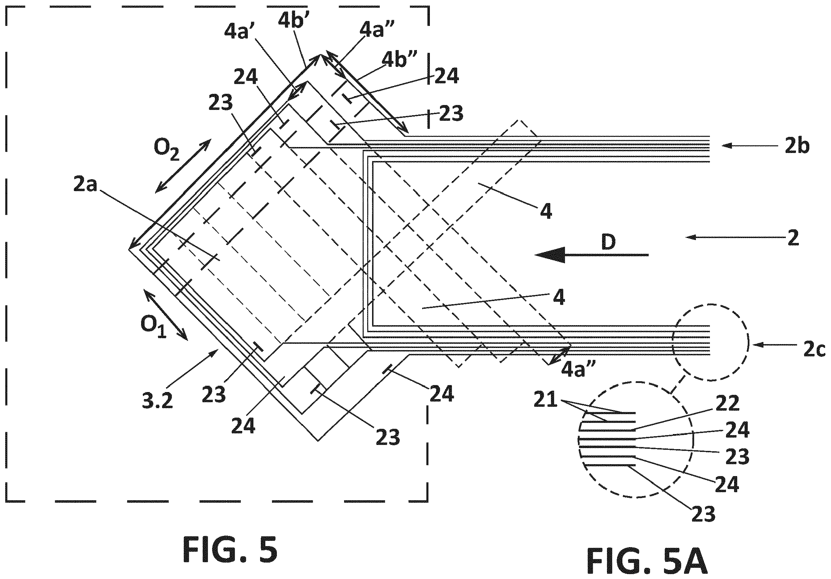

This composite laminate (2) is configured with any of the combination of plies shown in figures 4 and 5.

The airframe lifting surface (1) shown in figure 1 further comprises a plurality of stiffening elements (8) located along an upper surface of the laminate (2) and bonded to such composite laminate surface. Particularly, the stiffening elements (8) are stringers. In a particular example, the stiffening elements (8) are co-cured with a fresh set of stacked plies of the composite laminate (2). In another example, the stiffening elements (8) are co-bonded with the cured composite laminate (2).

Figures 4-5 show two embodiments of the composite laminate (2) of the invention.

According to the invention, the laminate (2) comprises the following combination of plies:
- first plies (21) formed by tapes (4) arranged parallel to the ramp direction (D),
- second plies (22) formed by tapes (4) arranged orthogonal to the ramp direction (D),
- third plies (23) formed by tapes (4) arranged in a first laying up direction (O1), being the first laying up direction (O1) different from the ramp direction (D) and the direction orthogonal to the ramp direction (D), and
- fourth plies (24) formed by tapes (4) arranged in a second laying up direction (O2), being the second laying up direction (O2) different from the ramp direction (D), the direction orthogonal to the ramp direction (D) and the first laying up direction (O1).
while, in the ramp area (2a),
- the tapes (4) forming the third (23) and/or fourth (24) plies are extended from one laminate side (2b) to the opposite laminate side (2c).

The above combination of plies is shown in detail in Figures 4A and 5A according to the embodiments of Figures 4 and 5 respectively.

Figure 4 shows a first embodiment of a composite laminate (2) with a particular lay out configuration in the ramp area (2a), since in such ramp area (2a), the tapes (4) forming the third (23) and the fourth (24) plies are extended from one laminate side (2b) to the opposite laminate side (2c), crossing over both laminate sides (2b, 2c).

Figure 5 shows a second embodiment of a composite laminate (2) with another particular lay out configuration in the ramp area (3), since in such ramp area (2a), the outermost shortest side of the tapes (4a') forming the third plies (23) are extended up to the outermost largest side of the tapes (4b') forming the fourth plies (24), and the outermost shortest side of the tapes (4a") forming the fourth plies (24) are extended up to the outermost largest side of the tapes (4b") forming the third plies (23).

As seen in the embodiments shown in Figures 4 and 5, the composite laminate (2) of the invention avoids the saw teeth effect in the ramp area (2a), by shifting it to the sides of the laminate (2b, 2c). This way, the invention provides in the mentioned ramp area (2a), an even surface suitable to be an interface with other components or parts that are to be co-cured, co-bonded or fastened together. Specifically, this surface evenness avoids porosity and wrinkles in co-cured processes; bonding issues in co-bonded processes; and irregular gaps in a fasten processes.

Both configurations may present some variants (embodiments) when first (21) and second (22) plies are taken into account. According to one preferred embodiment, the ramp area (2a) consists of third (23) and fourth plies (24). That is, there is no first (21) and second (22) plies in the ramp area (2a), since these plies are laid-up up to the beginning of the ramp area (2a). According to another preferred embodiment, the ramp area (2a) comprises first (21) and/or second (22) plies extended up to the outermost extreme (3, 5) of the third (23) and/or fourth plies (24) that form(s) said ramp area (2a). According to a further preferred embodiment, the ramp area (2a) comprises first (21) and/or second (22) plies extended beyond the outermost extreme (3, 5) of the third (23) and/or fourth plies (24) that form(s) said ramp area (2a).

In the particular embodiments shown in Figures 4 and 5, the tapes (4) of the first plies (21) are laid up in a direction of 0º with respect to the direction of the largest dimension of the laminate (2), which is coincident with the ramp direction D; the second plies (22) are laid up in a direction of ±90º with respect to the direction of the largest dimension of the laminate (2); the tapes (4) of the third plies (23) are laid up in a first laying up direction (O₁) of +45º with respect to the direction of the largest dimension of the laminate (2); and the tapes (4) of the fourth plies (24) are laid up in a second laying up direction (O₂) of -45º with respect to the direction of the largest dimension of the laminate (2).

In another preferred embodiment, the first (21) and the second (22) plies are laid up forming a stack of overlapping edges in the ramp area (2a). And preferably, the edges of the plies forming the stack are coincident with the sides of the laminate (2b, 2c).

In a particular embodiment, the tapes of each ply have a width greater than 3,81cm, thus consisting of a high deposition pre-preg laminate.

The present invention further provides a method for manufacturing a composite laminate (2) for an airframe lifting surface (1), the method comprising the steps of:
a) laying up pre-preg material forming a set of stacked plies comprising at least a ramp area (2a) defined by decreasing staggered plies extended along a ramp direction (D),
b) curing the set of stack plies obtained in the step a),
c) obtaining a composite laminate (2) for an airframe lifting surface (1) in the form of a cured composite laminate (2);
wherein the step a) comprises laying up at least:
- first plies (21) formed by tapes (4) arranged parallel to the ramp direction (D),
- second plies (22) formed by tapes (4) arranged orthogonal to the ramp direction (D),
- third plies (23) formed by tapes (4) arranged in a first laying up direction (O1), being the first laying up direction (O1) different from the ramp direction (D) and the direction orthogonal to the ramp direction (D), and
- fourth plies (24) formed by tapes (4) arranged in a second laying up direction (02), being the second laying up direction (02) different from the ramp direction (D), the direction orthogonal to the ramp direction (D) and the first laying up direction (O1);
and, in the ramp area (2a), laying up the tapes (4) forming the third (23) and/or fourth (24) plies from one laminate side (2b) to the another laminate side (2c).

According to a preferred embodiment, the laying up of step a) is performed according to one of the following:
- laying up first (21) and second (22) plies up to the ramp area (2a),
- laying up first (21) and/or second (22) plies up to the outermost extreme (3, 5) of the third (23) and/or fourth plies (24) deployed on said ramp area (2a),
- laying up first (21) and/or second (22) plies beyond the outermost extreme (3, 5) of the third (23) and/or fourth plies (24) deployed on said ramp area (2a).

According to another preferred embodiment, the step a) comprises, in the ramp area (2a), laying up the tapes (4) forming the third (23) and fourth (24) plies from one laminate side (2b) to the opposite laminate side (2c), crossing over both laminate sides (2b, 2c). This preferred embodiment leads to the composite laminate shown in Figures 4 and 4A.

According to another preferred embodiment, the step a) comprises, in the ramp area (2a),
- laying up the outermost shortest side of the tapes (4a') forming the third plies (23) up to the outermost largest side of the tapes (4b') forming the fourth plies (24), and
- laying up the outermost shortest side of the tapes (4a") forming the fourth plies (24) up to the outermost largest side of the tapes (4b") forming the third plies (23).

This preferred embodiment leads to the composite laminate shown in Figures 5 and 5A.

In a particular example for obtaining the laminates shown in Figures 4 and 5, the lay up would be following the subsequent order:
- a third ply (23) formed by tapes (4) arranged in the first laying up direction (O₁) of +45º,
- a fourth ply (24) formed by tapes (4) arranged in the second laying up direction (O₂) of -45º,
- a third ply (23) formed by tapes (4) arranged in the first laying up direction (O₁) of +45º,
- a fourth ply (24) formed by tapes (4) arranged in the second laying up direction (O₂) of -45º,
- a second ply (22) formed by tapes (4) arranged in a third laying up direction of ±90º with respect to the ramp direction (D), and
- two first ply (21) formed by tapes (4) arranged parallel to the ramp direction (D).

The invention further provides a method for manufacturing an airframe lifting surface (1) comprising the following steps:
i. providing at least a composite laminate (2) obtained in at least one of the steps of the method previously defined,
ii. providing stiffening elements (8),
iii. joining the stiffening elements (8) to the composite laminate (2),
iv. obtaining the airframe lifting surface (1).

In a particular example, the cured composite laminate (2), obtained in the step c) of the method previously defined for manufacturing a composite laminate (2), is joined to at least one stiffening element (8) by a co-bonding process wherein the stiffening element (8) is bonded to the composite laminate (2) by means of an adhesive line. This is performed on the step iii) of the method for manufacturing an airframe lifting surface (1).

In another particular example, the set of stacked plies in the form of a fresh composite laminate (so-called 'preform'), obtained in the step a) of the method previously defined for manufacturing a composite laminate (2), is joined to at least one stiffening element (8), and both components are cured together in a same curing cycle by means of a co-curing process.

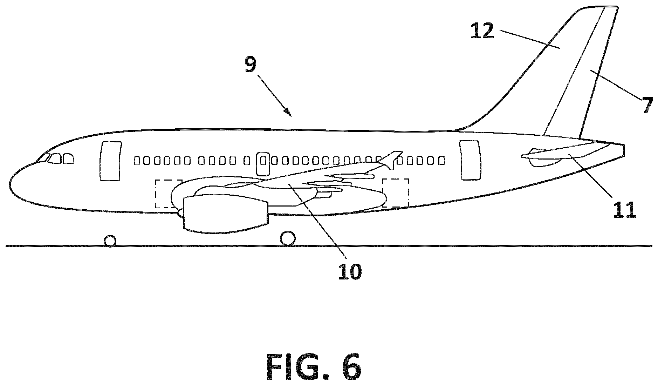

Finally, Figure 6 shows an aircraft (9) comprising a plurality of airframe lifting surfaces (1), such as a wing torsion box (10), a horizontal tail plain (11), a vertical tail plain (12), and a rudder (7). These airframe lifting surfaces (1) are manufactured from a composite laminate (2) according to the present invention.

## Claims

1. Composite laminate (2) for an airframe lifting surface (1), the composite laminate (2) being made of a pre-preg material, and comprising at least two sides (2b, 2b) and one ramp area (2a) defined by a decreasing staggered laminate extended along a ramp direction (D),
wherein the composite laminate (2) comprises a combination of:
- first plies (21) formed by tapes (4) arranged parallel to the ramp direction (D),
- second plies (22) formed by tapes (4) arranged orthogonal to the ramp direction (D),
- third plies (23) formed by tapes (4) arranged in a first laying up direction (O1), being the first laying up direction (O₁) different from the ramp direction (D) and the direction orthogonal to the ramp direction (D), and
- fourth plies (24) formed by tapes (4) arranged in a second laying up direction (O₂), being the second laying up direction (O₂) different from the ramp direction (D), the direction orthogonal to the ramp direction (D) and the first laying up direction (O₁);
and wherein in the ramp area (2a), the tapes (4) forming the third (23) and/or fourth (24) plies are extended from one laminate side (2b) to another laminate side (2c).

2. Composite laminate (2) for an airframe lifting surface (1), according to claim 1, wherein the ramp area (2a) consists of third (23) and fourth plies (24).

3. Composite laminate (2) for an airframe lifting surface (1), according to claim 1, wherein the ramp area (2a) comprises first (21) and/or second (22) plies extended up to the outermost extreme (3, 5) of the third (23) and/or fourth plies (24) forming said ramp area (2a).

4. Composite laminate (2) for an airframe lifting surface (1), according to claim 1, wherein the ramp area (2a) comprises first (21) and/or second (22) plies extended beyond the outermost extreme (3, 5) of the third (23) and/or fourth plies (24) forming said ramp area (2a).

5. Composite laminate (2) for an airframe lifting surface (1), according to any preceding claims, wherein the first (21) and the second (22) plies are laid up forming a stack of overlapping edges in the ramp area (2a).

6. Composite laminate (2) for an airframe lifting surface (1), according to claim 5, wherein the edges of the plies forming the stack are coincident with the sides of the laminate (2b, 2c).

7. Composite laminate (2) for an airframe lifting surface (1), according to any preceding claim, wherein in the ramp area (2a), the tapes (4) forming the third (23) and fourth (24) plies are extended from one laminate side (2b) to the opposite laminate side (2c), crossing over both laminate sides (2b, 2c).

8. Composite laminate (2) for an airframe lifting surface (1), according to any of claims 1-6, wherein in the ramp area (2a),
- the outermost shortest side of the tapes (4a') forming the third plies (23) are extended up to the outermost largest side of the tapes (4b') forming the fourth plies (24), and
- the outermost shortest side of the tapes (4a") forming the fourth plies (24) are extended up to the outermost largest side of the tapes (4b") forming the third plies (23).

9. Composite laminate (2) for an airframe lifting surface (1), according to any preceding claim, wherein the first laying up direction (O₁) is orthogonal to the second laying up direction (O₂), and wherein, preferably, the first laying up direction (O₁) is +45º and the second laying up direction (O₂) is -45º with respect to the largest direction of the laminate (2).

10. Composite laminate (2) for an airframe lifting surface (1), according to any preceding claim, wherein the ramp direction (D) is substantially parallel to the direction defined by the largest dimension of the laminate (2).

11. Airframe lifting surface (1) comprising a composite laminate (2) according to any preceding claim, and consisting of at least one of the followings: a torsion box, an horizontal tail plane, a vertical tail plane, a rudder, an elevator, an aileron, a spoiler or a flap.

12. Method for manufacturing a composite laminate (2) for an airframe lifting surface (1) according to any claims 1-10, the method comprising the steps of:
a) laying up pre-preg material forming a set of stacked plies comprising at least a ramp area (2a) defined by decreasing staggered plies extended along a ramp direction (D),
b) curing the set of stack plies obtained in the step a),
c) obtaining a composite laminate (2) for an airframe lifting surface (1) in the form of a cured composite laminate (2);
wherein the step a) comprises laying up at least:
- first plies (21) formed by tapes (4) arranged parallel to the ramp direction (D),
- second plies (22) formed by tapes (4) arranged orthogonal to the ramp direction (D),
- third plies (23) formed by tapes (4) arranged in a first laying up direction (O1), being the first laying up direction (O1) different from the ramp direction (D) and the direction orthogonal to the ramp direction (D), and
- fourth plies (24) formed by tapes (4) arranged in a second laying up direction (02), being the second laying up direction (02) different from the ramp direction (D), the direction orthogonal to the ramp direction (D) and the first laying up direction (O1);
- and, in the ramp area (2a), laying up the tapes (4) forming the third (23) and/or fourth (24) plies from one laminate side (2b) to the another laminate side (2c).

13. The method, according to claim 12, wherein the laying up of step a) comprises one of the following:
- laying up first (21) and second (22) plies up to the ramp area (2a),
- laying up first (21) and/or second (22) plies up to the outermost extreme (3, 5) of the third (23) and/or fourth plies (24) deployed on said ramp area (2a),
- laying up first (21) and/or second (22) plies beyond the outermost extreme (3, 5) of the third (23) and/or fourth plies (24) deployed on said ramp area (2a).

14. The method, according to any of claims 12-13, wherein the step a) comprises, in the ramp area (2a), laying up the tapes (4) forming the third (23) and fourth (24) plies from one laminate side (2b) to the opposite laminate side (2c), crossing over both laminate sides (2b, 2c).

15. The method, according to any of claims 12-13, wherein the step a) comprises, in the ramp area (2a),
- laying up the outermost shortest side of the tapes (4a') forming the third plies (23) up to the outermost largest side of the tapes (4b') forming the fourth plies (24), and
- laying up the outermost shortest side of the tapes (4a") forming the fourth plies (24) up to the outermost largest side of the tapes (4b") forming the third plies (23).

## Patentansprüche

1. Verbundlaminat (2) für eine Flugwerkhubfläche (1), wobei das Verbundlaminat (2) aus einem Prepregmaterial gefertigt ist und umfassend mindestens zwei Seiten (2b, 2b) und eine Rampenfläche (2a), die durch ein entlang einer Rampenrichtung (D) erstrecktes abnehmend gestaffeltes Laminat definiert ist,
wobei das Verbundlaminat (2) eine Kombination aus folgenden Elementen umfasst:
- erste Lagen (21), die durch Bänder (4) ausgebildet sind, die parallel zur Rampenrichtung (D) angeordnet sind,
- zweite Lagen (22), die durch Bänder (4) ausgebildet sind, die rechtwinklig zur Rampenrichtung (D) angeordnet sind,
- dritte Lagen (23), die durch Bänder (4) ausgebildet sind, die in einer ersten Verlegerichtung (O₁) angeordnet sind, die die erste Verlegerichtung (O₁) ist und sich von der Rampenrichtung (D) und der Richtung rechtwinklig zur Rampenrichtung (D) unterscheidet, und
- vierte Lagen (24), die durch Bänder (4) ausgebildet sind, die in einer zweiten Verlegerichtung (O₂) angeordnet sind, die die zweite Verlegerichtung (O₂) ist, die sich von der Rampenrichtung (D), der Richtung rechtwinklig zur Rampenrichtung (D) und der ersten Verlegerichtung (O₁) unterscheidet;
und wobei sich die die dritte (23) und/oder vierte (24) Lage ausbildenden Bänder (4) in der Rampenfläche (2a) von einer Laminatseite (2b) zu einer anderen Laminatseite (2c) erstrecken.

2. Verbundlaminat (2) für eine Flugwerkhubfläche (1) nach Anspruch 1, wobei die Rampenfläche (2a) aus dritten (23) und vierten Lagen (24) besteht.

3. Verbundlaminat (2) für eine Flugwerkhubfläche (1) nach Anspruch 1, wobei die Rampenfläche (2a) eine erste (21) und/oder zweite (22) Lage umfasst, die sich bis zum äußersten Punkt (3, 5) der dritten (23) und/oder vierten Lage (24) erstrecken, die die Rampenfläche (2a) ausbilden.

4. Verbundlaminat (2) für eine Flugwerkhubfläche (1) nach Anspruch 1, wobei die Rampenfläche (2a) eine erste (21) und/oder zweite (22) Lage umfasst, die sich über den äußersten Punkt (3, 5) der dritten (23) und/oder vierten Lage (24) hinaus erstrecken, die die Rampenfläche (2a) ausbilden.

5. Verbundlaminat (2) für eine Flugwerkhubfläche (1) nach einem der vorstehenden Ansprüche, wobei die erste (21) und die zweite (22) Lage derart verlegt sind, dass sie einen Stapel überlagernder Kanten in der Rampenfläche (2a) ausbilden.

6. Verbundlaminat (2) für eine Flugwerkhubfläche (1) nach Anspruch 5, wobei die Kanten der den Stapel ausbildenden Lagen mit den Seiten des Laminats (2b, 2c) zusammenfallen.

7. Verbundlaminat (2) für eine Flugwerkhubfläche (1) nach einem der vorstehenden Ansprüche, wobei sich die die dritte (23) und vierte (24) Lage ausbildenden Bänder (4) in der Rampenfläche (2a) von einer Laminatseite (2b) zur entgegengesetzten Laminatseite (2c) erstrecken und beide Laminatseiten (2b, 2c) überqueren.

8. Verbundlaminat (2) für eine Flugwerkhubfläche (1) nach einem der Ansprüche 1-6, wobei in der Rampenfläche (2a)
- sich die äußerste, kürzeste Seite der die dritten Lagen (23) ausbildenden Bänder (4a') bis zur äußersten, längsten Seite der die vierten Lagen (24) ausbildenden Bänder (4b') erstreckt und
- sich die äußerste, kürzeste Seite der die vierten Lagen (24) ausbildenden Bänder (4a") bis zur äußersten, längsten Seite der die dritten Lagen (23) ausbildenden Bänder (4b") erstreckt.

9. Verbundlaminat (2) für eine Flugwerkhubfläche (1) nach einem der vorstehenden Ansprüche, wobei die erste Verlegerichtung (O₁) rechtwinklig zur zweiten Verlegerichtung (O₂) ist und wobei vorzugsweise die erste Verlegerichtung (O₁) +45° und die zweite Verlegerichtung (O₂) -45º in Bezug zur längsten Richtung des Laminats (2) beträgt.

10. Verbundlaminat (2) für eine Flugwerkhubfläche (1) nach einem der vorstehenden Ansprüche, wobei die Rampenrichtung (D) im Wesentlichen parallel zur durch die größte Abmessung des Laminats (2) definierten Richtung ist.

11. Flugwerkhubfläche (1), umfassend ein Verbundlaminat (2) nach einem der vorstehenden Ansprüche und bestehend aus mindestens einem der folgenden Elemente: einem Torsionskasten, einer Höhenleitwerkebene, einer Seitenleitwerkebene, einem Seitenruder, einem Höhenruder, einem Querruder, einem Spoiler oder einer Klappe.

12. Verfahren zur Herstellung eines Verbundlaminats (2) für eine Flugwerkhubfläche (1) nach einem der Ansprüche 1-10, wobei das Verfahren die folgenden Schritte umfasst:
a) Verlegen eines Prepregmaterials, das einen Satz gestapelter Lagen ausbildet, die mindestens eine Rampenfläche (2a) umfassen, die durch das Abnehmen der entlang einer Rampenrichtung (D) erstreckten gestaffelten Lagen definiert ist,
b) Aushärten des in Schritt a) erhaltenen Satzes gestapelter Lagen,
c) Erhalten eines Verbundlaminats (2) für eine Flugwerkhubfläche (1) in Form eines ausgehärteten Verbundlaminats (2);
wobei der Schritt a) das Verlegen mindestens der folgenden Elemente umfasst:
- erster Lagen (21), die durch Bänder (4) ausgebildet sind, die parallel zur Rampenrichtung (D) angeordnet sind,
- zweiter Lagen (22), die durch Bänder (4) ausgebildet sind, die rechtwinklig zur Rampenrichtung (D) angeordnet sind,
- dritter Lagen (23), die durch Bänder (4) ausgebildet sind, die in einer ersten Verlegerichtung (O₁) angeordnet sind, die die erste Verlegerichtung (O₁) ist und sich von der Rampenrichtung (D) und der Richtung rechtwinklig zur Rampenrichtung (D) unterscheidet, und
- vierter Lagen (24), die durch Bänder (4) ausgebildet sind, die in einer zweiten Verlegerichtung (O₂) angeordnet sind, die die zweite Verlegerichtung (O₂) ist, die sich von der Rampenrichtung (D), der Richtung rechtwinklig zur Rampenrichtung (D) und der ersten Verlegerichtung (O₁) unterscheidet;
- und in der Rampenfläche (2a) Verlegen der die dritte (23) und/oder vierte (24) Lage ausbildenden Bänder (4) von einer Laminatseite (2b) zur anderen Laminatseite (2c) .

13. Verfahren nach Anspruch 12, wobei das Verlegen aus Schritt a) mindestens eines der folgenden Elemente umfasst:
- Verlegen einer ersten (21) und zweiten (22) Lage bis zur Rampenfläche (2a),
- Verlegen der ersten (21) und/oder zweiten (22) Lage bis zum äußersten Punkt (3, 5) der auf der Rampenfläche (2a) eingesetzten dritten (23) und/oder vierten Lage (24),
- Verlegen der ersten (21) und/oder zweiten (22) Lage über den äußersten Punkt (3, 5) der auf der Rampenfläche (2a) eingesetzten dritten (23) und/oder vierten Lage (24) hinaus.

14. Verfahren nach einem der Ansprüche 12-13, wobei der Schritt a) das Verlegen der die dritte (23) und vierte (24) Lage ausbildenden Bänder (4) in der Rampenfläche (2a) von einer Laminatseite (2b) zur entgegengesetzten Laminatseite (2c) umfasst, wobei beide Laminatseiten (2b, 2c) überquert werden.

15. Verfahren nach einem der Ansprüche 12-13, wobei der Schritt a) in der Rampenfläche (2a) Folgendes umfasst:
- Verlegen der äußersten, kürzesten Seite der die dritten Lagen (23) ausbildenden Bänder (4a') bis zur äußersten, längsten Seite der die vierten Lagen (24) ausbildenden Bänder (4b') und
- Verlegen der äußersten, kürzesten Seite der die vierten Lagen (24) ausbildenden Bänder (4a") bis zur äußersten, längsten Seite der die dritten Lagen (23) ausbildenden Bänder (4b").

## Revendications

1. Stratifié composite (2) pour une surface de levage de fuselage (1), le stratifié composite (2) étant constitué d'un matériau pré-imprégné, et comprenant au moins deux côtés (2b, 2b) et une surface en rampe (2a) définie par un stratifié échelonné allant en diminuant étendu le long d'une direction de la rampe (D),
dans lequel le stratifié composite (2) comprend une combinaison de :
premiers plis (21) formés par des bandes (4) disposées parallèlement à la direction de la rampe (D),
deuxièmes plis (22) formés par des bandes (4) disposées orthogonalement à la direction de la rampe (D),
troisièmes plis (23) formés par des bandes (4) disposées dans une première direction d'empilement (O1), la première direction d'empilement (O₁) étant différente de la direction de la rampe (D) et de la direction orthogonale à la direction de la rampe (D), et
quatrièmes plis (24) formés par des bandes (4) disposées dans une seconde direction d'empilement (O₂), la seconde direction d'empilement (O₂) étant différente de la direction de la rampe (D), de la direction orthogonale à la direction de la rampe (D), et de la première direction d'empilement (O₁) ;
et dans lequel dans la surface en rampe (2a), les bandes (4) formant les troisièmes (23) et/ou quatrièmes (24) plis sont étendues d'un côté du stratifié (2b) à un autre côté du stratifié (2c).

2. Stratifié composite (2) pour une surface de levage de fuselage (1) selon la revendication 1, dans lequel la surface en rampe (2a) est constituée de troisièmes (23) et quatrièmes (24) plis.

3. Stratifié composite (2) pour une surface de levage de fuselage (1) selon la revendication 1, dans lequel la surface en rampe (2a) comprend des premiers (21) et/ou deuxièmes (22) plis étendus jusqu'à l'extrémité la plus extérieure (3, 5) des troisièmes (23) et/ou quatrièmes (24) plis formant ladite surface en rampe (2a).

4. Stratifié composite (2) pour une surface de levage de fuselage (1) selon la revendication 1, dans lequel la surface en rampe (2a) comprend des premiers (21) et/ou deuxièmes (22) plis étendus au-delà de l'extrémité la plus extérieure (3, 5) des troisièmes (23) et/ou quatrièmes (24) plis formant ladite surface en rampe (2a).

5. Stratifié composite (2) pour une surface de levage de fuselage (1) selon l'une quelconque des revendications précédentes, dans lequel les premiers (21) et deuxièmes (22) plis sont empilés pour former une pile de bords en chevauchement dans la surface en rampe (2a).

6. Stratifié composite (2) pour une surface de levage de fuselage (1) selon la revendication 5, dans lequel les bords des plis formant la pile coïncident avec les côtés du stratifié (2b, 2c).

7. Stratifié composite (2) pour une surface de levage de fuselage (1) selon l'une quelconque des revendications précédentes, dans lequel dans la surface en rampe (2a), les bandes (4) formant les troisièmes (23) et quatrièmes (24) plis sont étendus d'un côté du stratifié (2b) au côté opposé du stratifié (2c), traversant les deux côtés du stratifié (2b, 2c).

8. Stratifié composite (2) pour une surface de levage de fuselage (1) selon l'une quelconque des revendications 1 à 6, dans lequel dans la surface en rampe (2a),
les côtés les plus courts les plus extérieurs des bandes (4a') formant les troisièmes plis (23) sont étendus jusqu'aux côtés les plus longs les plus extérieurs des bandes (4b') formant les quatrièmes plis (24),
les côtés les plus courts les plus extérieurs des bandes (4a") formant les quatrièmes plis (24) sont étendus jusqu'aux côtés les plus longs les plus extérieurs des bandes (4b") formant les troisièmes plis (23) .

9. Stratifié composite (2) pour une surface de levage de fuselage (1) selon l'une quelconque des revendications précédentes, dans lequel la première direction d'empilement (O₁) est orthogonale à la seconde direction d'empilement (O₂), et dans lequel de préférence, la première direction d'empilement (O₁) est à +45° et le seconde direction d'empilement (O₂) est à -45º par rapport à la direction la plus grande du stratifié (2).

10. Stratifié composite (2) pour une surface de levage de fuselage (1) selon l'une quelconque des revendications précédentes, dans lequel la direction de la rampe (D) est sensiblement parallèle à la direction définie par la dimension la plus grande du stratifié (2).

11. Surface de levage de fuselage (1) comprenant un stratifié composite (2) selon l'une quelconque des revendications précédentes, et constituée de l'un des éléments suivants : un caisson de torsion, un avion à empennage horizontal, un avion à empennage vertical, une gouverne de direction, une gouverne de profondeur, un aileron, un déporteur ou un volet.

12. Procédé de fabrication d'un stratifié composite (2) pour une surface de levage de fuselage (1) selon l'une quelconque des revendications 1 à 10, le procédé comprenant les étapes suivantes :
a) l'empilement d'un matériau pré-imprégné formant un ensemble de plis empilés comprenant au moins une surface en rampe (2a) définie par des plis échelonnés allant en diminuant étendus le long d'une direction de la rampe (D),
b) le durcissement de l'ensemble de plis empilés obtenus à l'étape a),
c) l'obtention d'un stratifié composite (2) pour une surface de levage de fuselage (1) sous la forme d'un stratifié composite durci (2) ;
dans lequel l'étape a) comprend l'empilement d'au moins :
des premiers plis (21) formés par des bandes (4) disposées parallèlement à la direction de la rampe (D),
des deuxièmes plis (22) formés par des bandes (4) disposées orthogonalement à la direction de la rampe (D),
des troisièmes plis (23) formés par des bandes (4) disposées dans une première direction d'empilement (O1), la première direction d'empilement (O₁) étant différente de la direction de la rampe (D) et de la direction orthogonale à la direction de la rampe (D), et
des quatrièmes plis (24) formés par des bandes (4) disposées dans une seconde direction d'empilement (O₂), la seconde direction d'empilement (O₂) étant différente de la direction de la rampe (D), de la direction orthogonale à la direction de la rampe (D), et de la première direction d'empilement (O₁) ;
et, dans la surface en rampe (2a), l'empilement des bandes (4) formant les troisièmes (23) et/ou quatrièmes (24) plis d'un côté du stratifié (2b) à l'autre côté du stratifié (2c).

13. Procédé selon la revendication 12, dans lequel l'empilement de l'étape a) comprend l'une des actions suivantes :
l'empilement de premiers (21) et deuxièmes (22) plis jusqu'à la surface en rampe (2a),
l'empilement de premiers (21) et/ou deuxièmes (22) plis jusqu'à l'extrémité la plus extérieure (3, 5) des troisièmes (23) et/ou quatrièmes (24) plis déployés sur ladite surface en rampe (2a),
l'empilement de premiers (21) et/ou deuxièmes (22) plis au-delà de l'extrémité la plus extérieure (3, 5) des troisièmes (23) et/ou quatrièmes (24) plis déployés sur ladite surface en rampe (2a).

14. Procédé selon l'une quelconque des revendications 12 ou 13, dans lequel l'étape a) comprend, dans la surface en rampe (2a), l'empilement des bandes (4) formant les troisièmes (23) et quatrièmes (24) plis d'un côté du stratifié (2b) au côté opposé du stratifié (2c), traversant les deux côtés du stratifié (2b, 2c).

15. Procédé selon l'une quelconque des revendications 12 ou 13, dans lequel l'étape a) comprend, dans la surface en rampe (2a),
l'empilement des côtés les plus courts les plus extérieurs des bandes (4a') formant les troisièmes plis (23) jusqu'aux côtés les plus longs les plus extérieurs des bandes (4b') formant les quatrièmes plis (24), et
l'empilement des côté les plus courts les plus extérieurs des bandes (4a") formant les quatrièmes plis (24) jusqu'aux côtés les plus longs les plus extérieurs des bandes (4b") formant les troisièmes plis (23).
